# EUROPÄISCHE PATENTANMELDUNG

(11) **EP 3 159 076 A1**
(43) Veröffentlichungstag der Anmeldung: **26.04.2017**
(21) Anmeldenummer: 16188861.5
(22) Anmeldetag: 15.09.2016
(51) Int. Cl.: B22D 31/00, B22D 29/00, B22C 9/10, F02F 3/00, F02F 3/16, B21K 1/18, B23P 25/00

(54) **VERFAHREN ZUR HERSTELLUNG EINES KOLBENS**

(30) Priorität: 19.10.2015 DE 102015220256
(71) Anmelder: MAHLE International GmbH, 70376 Stuttgart (DE)
(72) Erfinder: PFIZENMAIER, Lothar, 73669 Lichtenwald (DE); MÜLLER, Reiner, 78628 Rottweil (DE)
(74) Vertreter: BRP Renaud & Partner mbB Rechtsanwälte Patentanwälte Steuerberater

(57) **Zusammenfassung**

Die vorliegende Erfindung betrifft ein Verfahren zur Herstellung eines Kolbens (1) Verfahren zur Herstellung eines Kolbens (1) einer Brennkraftmaschine, mit einem Kühlkanal, bei dem zunächst ein Kolbenrohling (1', 1") hergestellt wird. Erfindungswesentlich ist dabei,
- dass ein Eingang (3) und ein Ausgang (4) des Kühlkanals (5) jeweils mittels eines Verschlusselements (6) verschlossen werden,
- der Kolbenrohling (1',1") fertigbearbeitet wird,
- die Verschlusselemente (6) entfernt werden.

Hierdurch kann insbesondere eine Bauteilsauberkeit erhöht werden.

## Beschreibung

Die vorliegende Erfindung betrifft ein Verfahren zur Herstellung eines Kolbens einer Brennkraftmaschine gemäß dem Oberbegriff des Anspruchs 1. Die Erfindung betrifft außerdem ein Verschlusselement eines solchen Kolbens sowie einen nach diesem Verfahren hergestellten Kolben.

Aus der DE 10 2011 086 411 A1 ist ein gattungsgemäßes Verfahren zur Herstellung eines Kolbens einer Brennkraftmaschine mit einer Gießform bekannt, bei welchem ein löslicher Gießkern auf Stützen der Gießform aufgestellt und fixiert wird. Anschließend wird die Gießform geschlossen und ein Gussmaterial eingebracht. Ist das Gussmaterial erstarrt, wird die Gießform vom fertig gegossenen Kolben getrennt, wobei nach dem Entformen des Kolbens zumindest ein Pinolenstift entnommen wird, wogegen zumindest ein Endabschnitt im Kolben eingegossen verbleibt und den Kühlkanal an dieser Stelle verschließt. Der lösliche Gießkern selbst wird nun aufgelöst, insbesondere ausgespült. Hierdurch soll insbesondere eine verbesserte Halterung bzw. Fixierung eines Gießkerns in der Gießform erreicht werden können.

Aus der DE 10 2012 215 543 A1 ist eine Gießform eines Kolbens einer Brennkraftmaschine mit einem löslichen und im Wesentlichen ringförmigen Gießkern zur Bildung eines Kühlkanals und mit zumindest zwei diesen Gießkern während des Gießvorgangs tragenden Stützen bekannt. An einer Verbindungsstelle zwischen zumindest einer der beiden Stützen oder einer zusätzlichen dritten Stütze und dem Gießkern ist dabei ein Blenden- oder Verschlusselement angeordnet, das nach dem Gießvorgang zumindest teilweise fest mit dem Kolben verbunden ist und das die Verbindungsteile nach Entfernen des Gießkerns verschließt oder einen zumindest gedrosselten Zwischenablauf bildet. Dadurch soll die Stabilität der Gießform erhöht und dadurch deren Handling deutlich vereinfacht werden können.

Bei bisherigen Verfahren zur Herstellung eines Kolbens bestand nach dem Herstellen eines Kolbenrohlings des Kolbens stets das Problem, dass während dem sich anschließenden Fertigbearbeiten unter Umständen Späne oder andere Verschmutzungen in den Kühlkanal gelangen und von dort nicht mehr mit absoluter Sicherheit vor Inbetriebnahme des Kolbens in einer Brennkraftmaschine entfernt werden konnten. Zwar wurden die fertigbearbeiteten Kolben auch bislang bereits unter hohem technischem Aufwand mit bis zu 100 bar Wasserdruck gereinigt und dabei der Kühlkanal ausgewaschen, wobei jedoch nicht absolut zuverlässig gewährleistet werden konnte, dass der Kühlkanal vollständig frei von Verunreinigungen war, so dass sich beispielsweise Metallspäne in unerwünschter Weise innerhalb des Kühlkanals verhaken konnten. Derartige im Kühlkanal verbleibende Verunreinigungen können jedoch beim Betrieb der Brennkraftmaschine zu Fehlfunktionen oder generell zu Kundenreklamationen bezüglich einer geforderten Bauteilsauberkeit führen.

Die vorliegende Erfindung beschäftigt sich daher mit dem Problem, für ein Verfahren der gattungsgemäßen Art eine verbesserte oder zumindest eine alternative Ausführungsform anzugeben, welche die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, vor dem eigentlichen Fertigbearbeiten eines Kolbens, einen Kühlkanal desselben mittels Verschlusselementen zu verschließen und dadurch vor einer unerwünschten Verschmutzung zu schützen. Bei dem erfindungsgemäßen Verfahren zur Herstellung des Kolbens einer Brennkraftmaschine wird zunächst ein Kolbenrohling hergestellt, beispielsweise geschmiedet oder gegossen, und nach dem Herstellen des Kolbenrohlings sowohl ein Eingang als auch ein Ausgang des Kühlkanals mittels eines Verschlusselements verschlossen und erst anschließend der Kolben fertig bearbeitet. Nach Abschluss der Arbeiten werden die Verschlusselemente entfernt und damit der vor Verschmutzung bewahrte Kühlkanal freigelegt. Wie erwähnt kann dies unabhängig davon erfolgen, ob der Kolbenrohling gegossen oder geschmiedet wurde. In jedem Fall können die Bauteilsauberkeit gesteigert und die Gefahr von nicht entfernten Metallspänen gesenkt werden. Das erfindungsgemäße Verfahren schützt somit den Kühlkanal in besonders einfacher aber zugleich effektiver Weise vor Verschmutzungen, indem vor dem eigentlichen Fertigbearbeiten des Kolbens die erfindungsgemäßen Verschlusselemente in den Eingang und den Ausgang des Kühlkanals eingebracht werden und diese verschließen.

Bei einer vorteilhaften Weiterbildung der erfindungsgemäßen Lösung wird der Kolbenrohling gegossen, beispielsweise aus Aluminium, wobei eine Gießform mit einer Negativkontur eines Kühlkanals verwendet wird und wobei zunächst die Gießform geschlossen und anschließend darin ein Gussmaterial eingebracht wird. Nach Erkalten des Gussmaterials wird die Gießform geöffnet und der Kolbenrohling entnommen. Nun werden sowohl ein Eingang als auch ein Ausgang des Kühlkanals mittels eines Verschlusselements verschlossen und erst anschließend der Kolben fertig bearbeitet. Nach Abschluss der Arbeiten werden die Verschlusselemente entfernt und damit der vor Verschmutzung bewahrte Kühlkanal freigelegt. Das erfindungsgemäße Verfahren funktioniert dabei unabhängig davon, ob der Kühlkanal durch eine als löslichen Gießkern ausgebildete Negativkontur/Negativform gebildet wird oder aber durch zwei Ausnehmungen, die jeweils in einem gegossenen Kolbenoberteil und einem separat hierzu gegossenen Kolbenunterteil angeordnet sind und erst bei einem Zusammensetzen des Kolbenoberteils und des Kolbenunterteils den Kühlkanal bilden. Wird dabei die Negativform für den Kühlkanal durch den zuvor erwähnten löslichen Gießkern, insbesondere einen Salzkern oder einen Sandkern gebildet, so wird dieser lösliche Gießkern selbstverständlich vor dem Schließen der Gießform in derselben fixiert. Dabei können der Eingang und der Ausgang im Kolbenunterteil angeordnet sein oder in einer Kühlkanalabdeckung.

Bei einer vorteilhaften Weiterbildung der erfindungsgemäßen Lösung wird der Kühlkanal nach dem Entfernen der Verschlusselemente gespült und dabei der lösliche Gießkern aufgelöst, insbesondere ausgespült. Das Auflösen und Ausspülen des Gießkerns kann somit ganz am Schluss des erfindungsgemäßen Verfahrens erfolgen, wodurch eventuelle Zwischenschritte vermieden und das Verfahren insgesamt beschleunigt werden kann. Alternativ ist selbstverständlich auch denkbar, dass nach dem Öffnen der Gießform zunächst der lösliche Gießkern ausgespült und erst anschließend der Eingang bzw. der Ausgang des Kühlkanals mittels der Verschlusselemente verschlossen wird.

In gleicher Weise funktioniert das erfindungsgemäße Verfahren auch bei einem Kolbenrohling, der aus einem geschmiedeten Kolbenoberteil und einem separat geschmiedeten Kolbenunterteil zusammengesetzt und dadurch der Kühlkanal gebildet wird. Das Kolbenoberteil und das Kolbenunterteil werden miteinander verschweißt. Beim geschmiedeten Stahlkolben können das Kolbenoberteil separat vom Kolbenunterteil gefertigt und später diese Teile durch Reibschweißen, Laserschweißen, Löten, etc. miteinander gefügt werden. Entsprechende Ausnehmungen im Kolbenoberteil und/oder im Kolbenunterteil bilden dann den Kühlkanal. Denkbar ist dabei selbstverständlich, dass der Eingang und der Ausgang im Kolbenunterteil oder in einer Kühlkanalabdeckung vorgesehen sind.

Bei einer vorteilhaften Weiterbildung der erfindungsgemäßen Lösung wird als Verschlusselement ein quellfähiger Rundstift aus einem natürlichen Schwammmaterial, ein Wattestift oder ein quellfähiger Kunststoffstift verwendet. Allen diesen Ausführungsformen ist dabei gemein, dass diese nicht nur leicht zu montieren sind, sondern unter Zutritt von Wasser bzw. Öl quellen und dadurch einen besonders dichten Verschluss des Kühlkanals bewirken. Zudem lassen sich derartige quellfähige Verschlusselemente auch wieder vergleichsweise einfach entfernen und insbesondere auch durch ein Trocknen recyceln, was insbesondere unter Umweltgesichtspunkten und einer Ressourcenschonung von großem Vorteil ist.

Bei einer weiteren vorteilhaften Ausführungsform des erfindungsgemäßen Verfahrens wird als Verschlusselement ein Korkpfropfen oder ein Holzstift verwendet, wobei alternativ auch vorgesehen sein kann, dass der Eingang und der Ausgang des Kühlkanals mit einem aus Heißkleber gebildeten Verschlusselement verschlossen werden. Ein als Korkpfropfen oder Holzstift ausgebildetes Verschlusselement stellt dabei eine besonders ökologische und nachhaltige Variante dar, wobei selbstverständlich das Verschließen des Eingangs und des Ausgangs mittels Heißklebers oder generell Kunststoffkleber den großen Vorteil hat, dass sich dieser automatisiert, prozesssicher und taktzeitneutral aufbringen lässt und nach dem Fertigbearbeiten des Kolbens ebenfalls leicht entfernt werden kann. Kunststoffkleber stellt dabei ebenfalls ein vergleichsweise kostengünstiges Material dar, welches zudem recycelbar ist.

Die vorliegende Erfindung beruht weiter auf dem allgemeinen Gedanken ein Verschlusselement für einen solchen Kolben anzugeben. Ein derartiges Verschlusselement kann als quellfähiger Rundstift aus einem natürlichen Schwammmaterial, als Wattestift, als quellfähiger Kunststoffstift, als Korkpfropfen, als Holzstift oder als aus einem Kunststoffkleber/Heißkleber ausgebildeter Pfropf ausgebildet sein. Besonders bei einer Ausbildung des Verschlusselements als Korkpfropfen oder als Holzstift kann auch eine keilförmige Ausführungsform denkbar sein, welche ein zuverlässiges Verschließen des Eingangs und des Ausgangs des Kühlkanals ermöglicht. Durch Vorsehen eines Kopfes an dem Verschlusselement kann zudem ein unbeabsichtigtes Hineinrutschen des Verschlusselements in den Eingang bzw. Ausgang des Kühlkanals und damit in den Kühlkanal zuverlässig vermieden werden. Über einen derartigen Kopf kann das Verschlusselement beim Demontieren auch leichter gegriffen werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: ein erfindungsgemäßes Verfahren zur Herstellung eines Kolbens mit einzelnen Verfahrensschritten,
- Fig. 2: eine Schnittdarstellung durch einen erfindungsgemäßen Kolben mit einem mittels einer Kühlkanalabdeckung abgedeckten Kühlkanal,
- Fig. 3: eine Schnittdarstellung wie in Fig. 2, jedoch bei einer anderen Ausführungsform des Kühlkanals und des Kolbens,
- Fig. 4: eine Ansicht von unten auf den Kolben gemäß der Fig. 2,
- Fig. 5: eine Ansicht von unten auf den Kolben gemäß der Fig. 3.

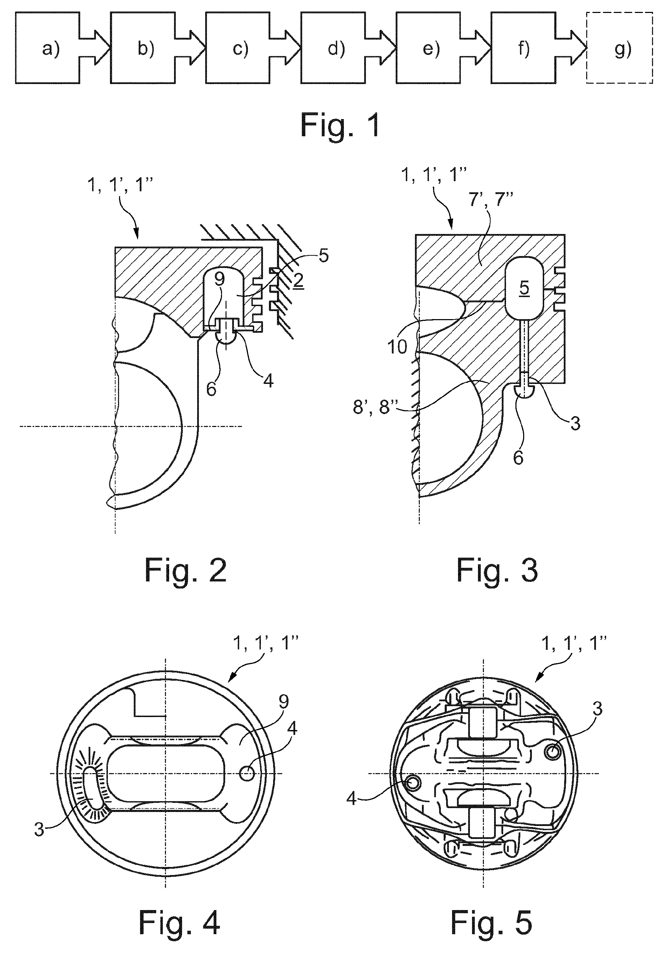

Entsprechend der Fig. 1, weist ein erfindungsgemäßes Verfahren zur Herstellung eines Kolbens 1 (vgl. auch die Fig. 2 bis 5) einer im Übrigen nicht gezeigten Brennkraftmaschine, vorzugsweise eines Kraftfahrzeuges, insgesamt sechs Verfahrensschritte a) bis f), sowie zusätzlich einen optionalen Verfahrensschritt g) auf. Bei dem erläuterten Verfahren zur Herstellung des Kolbens 1 handelt es sich um ein Gießverfahren, bei welchem zunächst in einem Verfahrensschritt a) eine die Negativform des Kolbens 1 abbildende Gießform 2 geschlossen wird und anschließend ein Gussmaterial, beispielsweise Aluminium oder Stahl, im Verfahrensschritt b) in die Gießform 2 eingebracht und dadurch ein Kolbenrohling 1' gegossen wird. Die Gießform 2 ist dabei lediglich teilweise in der Fig. 2 dargestellt. In der Gießform 2 ist dabei eine Negativform eines Kühlkanals 5 integriert, wobei diese Negativform durch die Gießform 2 selbst oder durch einen entsprechenden Gießkern, beispielsweise einen Sandkern oder einen Salzkern, gebildet werden kann. Anschließend wird die Gießform 2 im Verfahrensschritt c) geöffnet. Erfindungsgemäß werden nun im Verfahrensschritt d) ein Eingang 3 und ein Ausgang 4 mittels eines erfindungsgemäßen Verschlusselements 6 verschlossen. Im sich daran anschließenden Verfahrensschritt e) wird der Kolbenrohling 1' fertigbearbeitet, wonach die Verschlusselemente 6 im Verfahrensschritt f) entfernt werden. Durch das Verschließen des Eingangs 3 und des Ausgangs 4 des Kühlkanals 5 mittels der erfindungsgemäßen Verschlusselemente 6 vor dem Fertigbearbeiten kann eine Verunreinigung des Kühlkanals 5 während der Fertigbearbeitung ausgeschlossen werden, womit gleichzeitig beispielsweise ein Eindringen von Metallspänen in den Kühlkanal 5 vermieden werden kann.

Prinzipiell kann dabei der Kolbenrohling 1' auch aus einem gegossenen Kolbenoberteil 7' und einem gegossenen Kolbenunterteil 8' zusammengesetzt und dabei der Kühlkanal 5 gebildet werden. Das Kolbenoberteil 7' und das Kolbenunterteil 8' werden miteinander verschweißt, beispielsweise durch Reibschweißen, Laserschweißen, Löten, etc. gefügt werden. Der Eingang 3 und der Ausgang 4 sind dabei entweder im Kolbenunterteil 8' oder in einer Kühlkanalabdeckung 9 angeordnet.

Bislang wurden die in den Kühlkanal 5 eingetragenen Verunreinigungen unter hohem technischen Aufwand nach der Fertigung mit Wasserhochdruck mit bis zu 100 bar aus dem Kühlkanal 5 ausgewaschen, wobei jedoch nicht vollständig gewährleistet werden konnte, dass der Kühlkanal 5 vollständig frei von Verunreinigungen war, da sich beispielsweise Metallspäne im Kühlkanal 5 verhaken konnten. Die kundenseitig geforderte Bauteilsauberkeit war deshalb unter Umständen nicht oder nur sehr aufwändig zu gewährleisten. Bei dem erfindungsgemäßen Verfahren hingegen kann eine Verunreinigung des Kühlkanals 5 mit beispielsweise Metallspänen gänzlich ausgeschlossen werden, da sowohl der Eingang 3 als auch der Ausgang 4 des Kühlkanals 5 vor dem Bearbeiten, insbesondere vor dem Fertigbearbeiten, verschlossen und dadurch der Kühlkanal 5 versiegelt wird.

Bei einem gegossenen Kolbenrohling 1' kann vor dem Verfahrensschritt a), in welchem die Gießform 2 geschlossen wird, selbstverständlich der die Negativform des Kühlkanals 5 abbildende lösliche Gießkern, insbesondere ein Salz- oder Sandkern, in bekannter Weise in der Gießform 2 fixiert werden. Alternativ ist auch vorstellbar, dass die Gießform 2 jeweils eine Halbschale einer Negativform des Kühlkanals 5 bereitstellt, wobei in diesem Fall der Kolben 1 beispielsweise aus einem Kolbenoberteil 7' und einem Kolbenunterteil 8' zusammengesetzt ist (vgl. Fig. 3).

In einem sich an den Verfahrensschritt f) anschließenden Verfahrensschritt g) kann der lösliche Gießkern aus dem Kühlkanal 5 entfernt, insbesondere ausgespült bzw. ausgewaschen werden. Rein theoretisch ist dabei auch denkbar, dass der optionale Verfahrensschritt g) bereits nach dem Verfahrensschritt c), das heißt vor einem Verschließen des Eingangs 3 und des Ausgangs 4 mittels des Verschlusselements 6 durchgeführt wird. Der Buchstabe "g" bedeutet somit nicht, dass dieser Verfahrensschritt zwingend am Schluss des erfindungsgemäßen Verfahrens durchgeführt werden muss.

In gleicher Weise funktioniert das erfindungsgemäße Verfahren auch bei einem Kolbenrohling 1", der aus einem geschmiedeten Kolbenoberteil 7" und einem separat geschmiedeten Kolbenunterteil 8" zusammengesetzt und dadurch der Kühlkanal 5 gebildet wird. Das Kolbenoberteil 7" und das Kolbenunterteil 8" werden miteinander verschweißt. Beim geschmiedeten Stahlkolben wird das Kolbenoberteil 7" separat vom Kolbenunterteil 8" gefertigt und später werden die beiden Teile 7" und 8" durch Reibschweißen, Laserschweißen, Löten, etc. miteinander gefügt. Entsprechende Ausnehmungen im Kolbenoberteil 7" und/oder im Kolbenunterteil 8" bilden dann den Kühlkanal 5. Denkbar ist dabei selbstverständlich auch, dass der Eingang 3 und der Ausgang 4 im Kolbenunterteil 8" oder in einer Kühlkanalabdeckung 9 vorgesehen sind.

Die in Fig. 3 eingezeichnete Trennlinie 10 zwischen Kolbenoberteil 7', 7" und Kolbenunterteil 8', 8", die eine spätere Verbindungsnaht definiert, ist dabei nur rein exemplarisch zu verstehen, so dass diese selbstverständlich auch an anderer Stelle verlaufen kann.

Betrachtet man nun das erfindungsgemäße Verschlusselement 6, so kann dieses als quellfähiger Rundstift aus einem natürlichen Schwammmaterial, als Wattestift oder als quellfähiger Kunststoffstift ausgebildet sein. Dabei ist eine Form des Verschlusselements 6 selbstverständlich an die Form des Eingangs 3 bzw. des Ausgangs 4 angepasst, so dass das Verschlusselement 6 beispielsweise bei einem kreisringsegmentförmigen Eingang 3 eine ebenso kreisringsegmentförmige Gestalt aufweist (vgl. den Eingang 3 gemäß der Fig. 4).

Alternativ kann das Verschlusselement 6 selbstverständlich auch als Korkpfropfen oder als Holzstift ausgebildet sein und dadurch sowie wie bei der zuvor erwähnten Ausbildung nachhaltig und ökologisch hergestellt werden.

Wiederum alternativ ist auch denkbar, dass der Eingang 3 und der Ausgang 4 des Kühlkanals 5 mit einem aus Heißkleber/Kunststoffkleber gebildeten Verschlusselement 6 verschlossen wird, wobei ein derartiges Verschlusselement 6 nach der Fertigbearbeitung des Kolbens 1 einfach zu entfernen und zuvor prozesssicher und taktzeitneutral aufgebracht werden kann. Ein derartiger Kunststoffkleber bzw. Heißkleber hält auch auf feuchten und mit Kühlschmierstoff benetzten Flächen, wodurch sich der Fertigungsablauf vereinfacht. Dabei wird aus dem "Heißkleber" eine Art Haube geformt, die innen hohl ist, sodass diese im Nachgang von dem automatisierten Werkzeug besser/leichter entfernt werden kann (ähnlich wie in den Fig. 1 und 2).

Mit dem erfindungsgemäßen Verfahren lässt sich somit der Kolben 1 hinsichtlich beispielsweise technischer Bauteilsauberkeitsvorschriften deutlich zuverlässiger herstellen, da der Kühlkanal 5 während der die Verschmutzungen üblicherweise hervorrufenden Bearbeitungsschritte durch die Verschlusselemente 6 verschlossen und damit versiegelt und vor einer Verschmutzung geschützt ist. Die Verschlusselemente 6 lassen sich dabei kostengünstig herstellen und einfach in den Fertigungsablauf integrieren.

## Patentansprüche

1. Verfahren zur Herstellung eines Kolbens (1) einer Brennkraftmaschine, mit einem Kühlkanal, bei dem zunächst ein Kolbenrohling (1', 1 ") hergestellt wird, **dadurch gekennzeichnet,**
- **dass** ein Eingang (3) und ein Ausgang (4) des Kühlkanals (5) jeweils mittels eines Verschlusselements (6) verschlossen werden,
- der Kolbenrohling (1',1 ") fertigbearbeitet wird,
- die Verschlusselemente (6) entfernt werden.

2. Verfahren nach Anspruch 1,
**dadurch gekennzeichnet**,
der Kolbenrohling (1') gegossen wird.

3. Verfahren nach Anspruch 2,
**dadurch gekennzeichnet,**
**dass** vor dem Gießen des Kolbenrohlings (1') ein löslicher Gießkern, insbesondere ein Sandkern oder ein Salzkern, als Negativkontur für den Kühlkanal (5) in einer Gießform (2) fixiert wird.

4. Verfahren nach Anspruch 3,
**dadurch gekennzeichnet,**
**dass** vor dem Verschließen des Eingangs (3) und des Ausgangs (4) des Kühlkanals (5) mittels der Verschlusselemente (6) oder nach dem Entfernen der Verschlusselemente (6) der lösliche Gießkern aufgelöst, insbesondere aus dem Kühlkanal (5) ausgespült, wird.

5. Verfahren nach Anspruch 1,
**dadurch gekennzeichnet,**
- **dass** der Kolbenrohling (1') aus einem gegossenen Kolbenoberteil (7') und einem gegossenen Kolbenunterteil (8') zusammengesetzt und dabei der Kühlkanal (5) gebildet wird,
- **dass** der Eingang (3) und der Ausgang (4) im Kolbenunterteil (8') angeordnet sind, oder
- **dass** eine Kühlkanalabdeckung (9) vorgesehen ist, in welcher der Eingang (3) und der Ausgang (4) angeordnet sind.

6. Verfahren nach Anspruch 1,
**dadurch gekennzeichnet,**
- **dass** der Kolbenrohling (1") aus einem geschmiedeten Kolbenoberteil (7") und einem geschmiedeten Kolbenunterteil (8") zusammengesetzt und dabei der Kühlkanal (5) gebildet wird,
- **dass** das Kolbenoberteil (7") und das Kolbenunterteil (8") miteinander verschweißt werden,
- **dass** der Eingang (3) und der Ausgang (4) im Kolbenunterteil (8") oder in einer Kühlkanalabdeckung (9) vorgesehen sind.

7. Verfahren nach einem der Ansprüche 1 bis 6,
**dadurch gekennzeichnet,**
**dass** als Verschlusselement (6) ein quellfähiger Rundstift aus einem natürlichen Schwammmaterial, ein Wattestift oder ein quellfähiger Kunststoffstift verwendet wird.

8. Verfahren nach einem der Ansprüche 1 bis 7,
**dadurch gekennzeichnet,**
- **dass** als Verschlusselement (6) ein Korkpfropfen oder ein Holzstift verwendet wird, oder
- **dass** der Eingang (3) und/oder der Ausgang (4) des Kühlkanals (5) mit einem aus Kunststoffkleber, insbesondere aus Heißkleber, gebildeten Verschlusselement (6) verschlossen wird.

9. Verschlusselement (6) für einen nach dem Verfahren nach einem der Ansprüche 1 bis 8 hergestellten Kolben (1), wobei
- das Verschlusselement (6) als quellfähiger Rundstift aus einem natürlichen Schwammmaterial, als Wattestift oder als quellfähiger Kunststoffstift ausgebildet ist, oder
- das Verschlusselement (6) ein Korkpfropfen oder ein Holzstift ist, oder
- das Verschlusselement (6) als aus einem Kunststoffkleber, insbesondere aus einem Heißkleber, ausgebildeter Pfropf ausgebildet ist.

10. Kolben (1) für eine Brennkraftmaschine, vorzugsweise eines Kraftfahrzeugs, der nach dem Verfahren nach einem der Ansprüche 1 bis 8 und mit Hilfe eines Verschlusselements (6) nach Anspruch 9 hergestellt ist.
